# EUROPÄISCHE PATENTSCHRIFT

(11) **EP 3 582 923 B1**
(45) Veröffentlichungstag und Bekanntmachung des Hinweises auf die Patenterteilung: **10.04.2024**
(21) Anmeldenummer: 18705642.9
(22) Anmeldetag: 16.02.2018
(51) Int. Cl.: B23K 26/00, C08G 18/48, C08G 18/66, C08G 18/76, C08G 18/80, C08G 18/12, C08G 18/32

(54) **REAKTIVES THERMOPLASTISCHES POLYURETHAN AUF BASIS GEBLOCKTER ISOCYANATE**
REACTIVE THERMOPLASTIC POLYURETHANE BASED ON BLOCKED ISOCYANATES
POLYURÉTHANE THERMOPLASTIQUE RÉACTIF À BASE D'ISOCYANATE SÉQUENCÉ

(30) Priorität: 17.02.2017 EP 17156655
(43) Veröffentlichungstag der Anmeldung: 25.12.2019
(73) Patentinhaber: BASF SE, 67056 Ludwigshafen am Rhein (DE)
(72) Erfinder: HOLLMANN, Rajan, 49448 Lemfoerde (DE); RICHTER, Sebastian, 49448 Lemfoerde (DE); HUFNAGEL, Martin, 49448 Lemfoerde (DE); WAGNER, Hendrik, 49448 Lemfoerde (DE)
(74) Vertreter: BASF IP Association
(86) Internationale Anmeldenummer: PCT/EP2018/053910
(87) Internationale Veröffentlichungsnummer: WO 2018/149977

(56) Entgegenhaltungen:
- WO-A1-95/01407
- S. SUBRAMANI ET AL: "New development of polyurethane dispersion derived from blocked aromatic diisocyanate", PROGRESS IN ORGANIC COATINGS, Bd. 48, Nr. 1, 1. November 2003 (2003-11-01), Seiten 71-79, XP055392080, NL ISSN: 0300-9440, DOI: 10.1016/S0300-9440(03)00118-8

## Beschreibung

Die vorliegende Erfindung betrifft eine Zusammensetzung (Z1) enthaltend ein thermoplastisches Polyurethan (TPU1), das zumindest im Temperaturbereich unter 50°C fest ist und Endgruppen ausgewählt aus der Gruppe bestehend aus Endgruppen (EG1) und Endgruppen (EG2) aufweist, wobei die Endgruppen (EG1) bei einer Temperatur (T1) bzw. die Endgruppen (EG2) bei einer Temperatur (T2) unter Bildung von reaktiven Gruppen am thermoplastischen Polyurethan (TPU1) abgespalten werden können, die eine Reaktion mit funktionellen Gruppen des thermoplastischen Polyurethans (TPU1) oder einer weiteren Komponente der Zusammensetzung (Z1) eingehen können, wobei die Temperatur (T1) und die Temperatur (T2) jeweils größer oder gleich 60°C ist. Die vorliegende Erfindung betrifft auch ein Verfahren zur Herstellung einer Zusammensetzung (Z1) enthaltend ein thermoplastisches Polyurethan, sowie die Zusammensetzung enthaltend das thermoplastische Polyurethan erhältlich oder erhalten gemäß einem derartigen Verfahren. Weiterhin betrifft die vorliegende Erfindung die Verwendung einer erfindungsgemäßen Zusammensetzung oder eines erfindungsgemäßen thermoplastischen Polyurethans zur Herstellung eines Formkörpers sowie ein Verfahren zur Herstellung eines Formkörpers und den erhaltenen Formkörper.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

Um Bauteile unterschiedlichster Geometrien herstellen zu können, werden thermoplastische Polyurethane neben Verfahren wie Extrusion oder Spritzguss auch in Schichtbauverfahren verarbeitet, beispielsweise pulverbasierte Schichtbauverfahren.

Bei aus dem Stand der Technik bekannten Verfahren wird ein Kompromiss aus guter Verarbeitung und mechanischen Eigenschaften eingegangen. Die Verwendung von TPUs mit niedrigen Molekulargewichten ermöglicht eine gute Verarbeitung des Materials aufgrund ihrer niedrigeren Schmelzeviskositäten, diese haben allerdings den Nachteil schlechterer mechanischer Eigenschaften. Die Verwendung von Hochleistungs-TPUs mit entsprechend hohen Molekulargewichten erschwert und verlangsamt den Lasersinterprozess erheblich.

So offenbart WO 2015/197515 A1 die Verwendung von thermoplastischen Polyurethanpulvern in pulverbasierten additiven Fertigungsverfahren zur Herstellung von thermoplastischen Gegenständen. Als additive Fertigungsverfahren werden dabei solche Verfahren bezeichnet, mit denen Gegenstände schichtweise aufgebaut werden.

US 9,453,142 betrifft polymerisierbare Flüssigkeiten oder Harze, die für die Herstellung eines dreidimensionalen Objekts aus Polyurethan, Polyharnstoff oder einem Copolymer eingesetzt werden. Das Harz enthält dabei ein blockiertes oder reaktive blockiertes Präpolymer, ein blockiertes oder reaktive blockiertes Diisocyanat, oder einen blockierten oder reaktive blockierten Diisocyanat-Kettenverlängerer.

EP 0 089 180 A1 offenbart ein kristallines, mahlfähiges und am Ende blockiertes Präpolymeres, das sich zur Verwendung bei der Gewinnung eines Polyurethanelastomeren eignet und aus dem Reaktionsprodukt einer Umsetzung eines organischen Polyisocyanats, eines kristallinen, langkettigen Diols eines durchschnittlichen Molekulargewichts von 500 bis 5000, eines Polyhydroxyvernetzungsmittels und eines das Ende blockierenden Mittels besteht.

US 4,434,126 offenbart Verfahren zur Herstellung von flexiblen Polyurethanfolien. Dabei werden fein verteilte Teilchen eines Polyurethan-Vorpolymerisats eingesetzt, das das Reaktionsprodukt aus einem organischen Polyisocyanat, einem kristallinen langkettigen Diol mit einem durchschnittlichen Molgewicht von 500 bis 5000, einem Polyhydroxy-Quervernetzungsmittel und einem End-Blockierungsmittel umfasst. Die resultierenden Polyurethan-Elastomere weisen einen 100 %-Modul von weniger als 17,58 kg/cm² (250 psi) und einen 300%-Modul im Bereich von 14,06 bis 35,15 kg/cm2 (200 bis 500 psi) auf.

WO 95/01407 A1 offenbart ein thermoplastisches Polyurethan hergestellt aus Polyesterpolyolen und einem Caprolactam-blockiertem Isocyanat.

In einer Veröffentlichung von S. Subbramani et al. ("New development of polyurethane dispersion derived from blocked aromatic diisocyanate", PROGRESS IN ORGANIC COATINGS, Bd. 48, Nr. 1, (2003-11-01), Seiten 71-79) werden die thermischen Dissoziationstemperaturen blockierter Isocyanate offenbart.

Die aus dem Stand der Technik bekannten Verfahren stellen alle einen Kompromiss aus Verarbeitbarkeit der Materialien und mechanischen Eigenschaften der erhaltenen Produkte dar.

Ausgehend vom Stand der Technik lag eine der vorliegenden Erfindung zugrundeliegende Aufgabe demgemäß darin, verbesserte Materialien bereitzustellen, die gut verarbeitet werden können und die Herstellung von Produkten mit guten mechanischen Eigenschaften ermöglichen.

Erfindungsgemäß wird diese Aufgabe gelöst durch Verwendung einer Zusammensetzung (Z1) zur Herstellung eines Formkörpers, wobei die Zusammensetzung (Z1) ein thermoplastisches Polyurethan (TPU1) enthält, erhältlich durch Umsetzung mindestens der Komponenten (i) und (ii):
(i) mindestens eine Polyisocyanatzusammensetzung,
(ii) mindestens eine Polyolzusammensetzung,

wobei das thermoplastische Polyurethan (TPU1) zumindest im Temperaturbereich unter 50°C fest ist und Endgruppen ausgewählt aus der Gruppe bestehend aus Endgruppen (EG1) und Endgruppen (EG2) aufweist, wobei die Endgruppen (EG1) bei einer Temperatur (T1) bzw. die Endgruppen (EG2) bei einer Temperatur (T2) unter Bildung von reaktiven Gruppen am thermoplastischen Polyurethan (TPU1) abgespalten werden können, die eine Reaktion mit funktionellen Gruppen des thermoplastischen Polyurethans (TPU1) oder einer weiteren Komponente der Zusammensetzung (Z1) eingehen können,
wobei die Temperatur (T1) und die Temperatur (T2) jeweils größer oder gleich 60°C ist,
wobei die Herstellung des Formkörpers mittels pulverbasierter Schichtbauverfahren erfolgt.

Durch die erfindungsgemäße Verwendung der Zusammensetzungen lässt sich ein niedriges Molekulargewicht und damit verbunden eine niedrige Schmelzeviskosität bei der Verarbeitung mit einem höheren Molekulargewicht im fertigen Bauteil vereinen. Überraschend wurde gefunden, dass durch die Einbringung thermisch labiler Gruppen (EG1) und/oder (EG2) feste thermoplastische Polyurethane erhalten werden können, die in Pulverform weiterverarbeitet werden können und die im Ausgangszustand noch nicht voll ausreagiert sind. Es hat sich gezeigt, dass erfindungsgemäß Pulver erhalten werden können, die beim Aufschmelzen, beispielsweise durch einen Laser, besonders gut zusammenfließen können und dass die zwischen den Pulverkörnern befindliche Luft besser aus der Schmelze ausgasen kann. Durch das dementsprechend niedrige Molekulargewicht und entsprechende Schmelzeviskosität lassen sie sich gut verarbeiten. Während der Weiterverarbeitung, insbesondere bei einem Schmelzvorgang, spalten die thermisch labilen Endgruppen ab, wodurch reaktive Gruppen, beispielsweise Isocyanatgruppen oder Hydroxygruppen am thermoplastischen Polyurethan gebildet werden, die dann weiter reagieren und somit zu weiterem Molekulargewichtsaufbau führen. Die erfindungsgemäß erhaltenen Formkörper zeichnen sich dann durch verbesserte mechanische Eigenschaften aus.

Die erfindungsgemäß verwendete Zusammensetzung (Z1) enthält ein thermoplastisches Polyurethan (TPU1) und kann weiterer Komponenten enthalten, beispielsweise nicht vollständig umgesetzte Verbindungen, die bei der Herstellung des thermoplastischen Polyurethans eingesetzt wurden. Erfindungsgemäß ist die Zusammensetzung (Z1) ebenfalls fest, vorzugsweise zumindest im Temperaturbereich unter 50°C fest.

Das thermoplastische Polyurethan (TPU1) ist erhältlich durch Umsetzung mindestens einer Polyisocyanatzusammensetzung und mindestens eine Polyolzusammensetzung und ist zumindest im Temperaturbereich unter 50°C fest. Bevorzugt ist das thermoplastische Polyurethan (TPU1) im Rahmen der vorliegenden Erfindung zumindest im Temperaturbereich unter 60°C fest, weiter bevorzugt zumindest im Temperaturbereich unter 80°C fest, besonders bevorzugt ist das thermoplastische Polyurethan (TPU1) zumindest im Temperaturbereich unter 100°C fest.

Das thermoplastische Polyurethan (TPU1) weist im Rahmen der vorliegenden Erfindung Endgruppen ausgewählt aus der Gruppe bestehend aus Endgruppen (EG1) und Endgruppen (EG2) auf, die bei einer Temperatur (T1) bzw. (T2) unter Bildung von reaktiven Gruppen am thermoplastischen Polyurethan (TPU1) abgespalten werden können, die eine Reaktion mit funktionellen Gruppen des thermoplastischen Polyurethans (TPU1) oder einer weiteren Komponente der Zusammensetzung (Z1) eingehen können, wobei die Temperatur (T1) und die Temperatur (T2) jeweils größer oder gleich 60°C ist. Erfindungsgemäß kann das thermoplastische Polyurethan (TPU1) also Endgruppen (EG1) aufweisen oder Endgruppen (EG2) oder Endgruppen (EG1) und Endgruppen (EG2).

Die Endgruppen (EG1) und (EG2) können bei einer Temperatur (T1) bzw. (T2) unter Bildung von reaktiven Gruppen am thermoplastischen Polyurethan (TPU1) abgespalten werden, d.h. ein Teil der Endgruppe wird vom thermoplastischen Polyurethan abgespalten und am thermoplastischen Polyurethan (TPU1) verbleibt eine reaktive Gruppe, die eine Reaktion eingehen kann. Eine Reaktion kann dabei insbesondere ein Kettenaufbau oder eine Vernetzung sein. Reaktive Gruppen können dabei insbesondere Isocyanatgruppen sein oder Gruppen, die gegenüber Isocyanaten reaktiv sind, wie insbesondere Hydroxygruppen oder Amine. Erfindungsgemäß können die nach Abspaltung der Endgruppen gebildeten reaktiven Gruppen mit weiteren funktionellen Gruppen des thermoplastischen Polyurethans (TPU1) reagieren oder auch mit funktionellen Gruppen einer weiteren Komponente der Zusammensetzung (Z1), wie beispielsweise nicht umgesetzten Aufbaukomponenten des thermoplastischen Polyurethans.

Erfindungsgemäß ist es auch möglich, dass das thermoplastische Polyurethan weitere Endgruppen aufweist, die bei einer geeigneten Temperatur unter Bildung reaktiver Gruppen abgespalten werden können.

Geeignete Endgruppen sind dem Fachmann an sich bekannt. Erfindungsgemäß können die Endgruppen insbesondere solche sein, die üblicherweise als thermisch labile Schutzgruppen eingesetzt werden.

Der Anteil der Endgruppen (EG1) und/oder (EG2) kann in weiten Bereichen variieren. Erfindungsgemäß wird der Anteil der Endgruppen so gewählt, dass eine weitere Umsetzung des thermoplastischen Polyurethans (TPU1) nach der Abspaltung der Endgruppen gut möglich ist. Dabei kann der Anteil der Summe der Endgruppen (EG1) und (EG2) beispielsweise im Bereich von 0,01 bis 50 mol% bezogen auf den Anteil der Urethangruppen im thermoplastischen Polyurethan (TPU1) liegen.

Gemäß einer weiteren Ausführungsform betrifft die vorliegende Erfindung auch die Verwendung einer Zusammensetzung wie zuvor beschrieben, wobei der Anteil der Summe der Endgruppen (EG1) und (EG2) im Bereich von 0,01 bis 50 mol% bezogen auf den Anteil der Urethangruppen im thermoplastischen Polyurethan (TPU1) liegt.

Erfindungsgemäß werden solche Endgruppen (EG1) und Endgruppen (EG2) eingesetzt, die bei einer Temperatur (T1) bzw. (T2) unter Bildung von reaktiven Gruppen am thermoplastischen Polyurethan (TPU1) abgespalten werden können, wobei die Temperatur (T1) und die Temperatur (T2) jeweils größer oder gleich 60°C ist. Erfindungsgemäß können die Endgruppen also beispielsweise bei der weiteren Verarbeitung der Zusammensetzung (Z1) bzw. des thermoplastischen Polyurethans (TPU1), insbesondere beim Aufschmelzen des thermoplastischen Polyurethans abgespalten werden. Im Rahmen der vorliegenden Erfindung ist die Temperatur (T1) und die Temperatur (T2) jeweils größer oder gleich 80°C, weiter bevorzugt jeweils größer oder gleich 100°C. Dabei ist im Rahmen der vorliegenden Erfindung die Temperatur (T1) üblicherweise nicht gleich der Temperatur (T2). Damit ist es im Rahmen der vorliegenden Erfindung auch möglich, dass die Endgruppen bei unterschiedlichen Temperaturen und somit unterschiedlichen Verarbeitungsschritten des thermoplastischen Polyurethans (TPU1) abgespalten werden.

Das thermoplastische Polyurethan (TPU1) ist erhältlich durch Umsetzung mindestens einer Polyisocyanatzusammensetzung und mindestens eine Polyolzusammensetzung. Die Polyolzusammensetzung enthält erfindungsgemäß Polyole. Erfindungsgemäß kann die Polyolzusammensetzung auch Kettenverlängerer enthalten. Im Rahmen der vorliegenden Erfindung werden als Kettenverlängerer Verbindungen mit mindestens zwei gegenüber Isocyanaten reaktiven Gruppen eingesetzt. Somit ist es erfindungsgemäß möglich, dass auch die Zusammensetzung (Z1) als weitere Komponenten nicht umgesetzten Kettenverlängerer enthält.

Gemäß einer weiteren Ausführungsform betrifft die vorliegende Erfindung auch die Verwendung einer Zusammensetzung wie zuvor beschrieben, wobei die Polyolzusammensetzung mindestens einen Kettenverlängerer ausgewählt aus Verbindungen mit mindestens zwei gegenüber Isocyanatgruppen reaktiven Gruppen enthält. Weiterhin betrifft die vorliegende Erfindung gemäß einer weiteren Ausführungsform auch die Verwendung einer Zusammensetzung wie zuvor beschrieben, wobei die Zusammensetzung (Z1) mindestens einen Kettenverlängerer ausgewählt aus Verbindungen mit mindestens zwei gegenüber Isocyanatgruppen reaktiven Gruppen enthält.

Im Rahmen de vorliegenden Erfindung weist mindestens ein Teil des eingesetzten Isocyanats Endgruppen (EG1) auf oder mindestens eine der Komponenten der Polyolzusammensetzung weist Endgruppen (EG2) auf.

Bevorzugt wird mindestens ein Kettenverlängerer eingesetzt, ausgewählt aus der Gruppe bestehend aus Verbindungen mit mindestens zwei gegenüber Isocyanaten reaktiven Gruppen mit einem Molekulargewicht von <500 g/mol.

Als Kettenverlängerer werden Verbindungen mit mindestens zwei gegenüber Isocyanaten reaktiven Gruppen eingesetzt. Gegenüber Isocyanaten reaktive Gruppen können insbesondere NH, OH oder auch SH-Gruppen sein. Geeignete Verbindungen sind dem Fachmann an sich bekannt. Geeignet sind beispielsweise Diamine oder auch Diole. Demgemäß betrifft die die vorliegende Erfindung gemäß einer weiteren Ausführungsform auch die Verwendung einer Zusammensetzung wie zuvor beschrieben, wobei der Kettenverlängerer ausgewählt ist aus der Gruppe bestehend aus Diaminen und Diolen mit einem Molekulargewicht bis 500 g/mol.

Erfindungsgemäß kann der eingesetzte Kettenverlängerer zwei gegenüber Isocyanaten reaktive Gruppen und weitere Gruppen aufweisen, beispielsweise geeignete Endgruppen (EG2). Es ist jedoch im Rahmen der vorliegenden Erfindung auch möglich, dass Kettenverlängerermischungen eingesetzt werden, enthaltend mindestens einen Kettenverlängerer mit zwei gegenüber Isocyanaten reaktiven Gruppen und mindestens einem Kettenverlängerer, der zwei gegenüber Isocyanaten reaktiven Gruppen und mindestens eine Endgruppe (EG2) aufweist.

Erfindungsgemäß ist es auch möglich, dass der eingesetzte Kettenverlängerer eine gegenüber Isocyanaten reaktive Gruppe und weitere Gruppen aufweisen, beispielsweise geeignete Endgruppen (EG2). Beispielsweise kann der eingesetzte Kettenverlängerer eine gegenüber Isocyanaten reaktive Gruppe und eine geeignete Endgruppe (EG2) aufweisen. Im Rahmen der vorliegenden Erfindung ist es auch möglich, dass Kettenverlängerermischungen eingesetzt werden, enthaltend mindestens einen Kettenverlängerer mit zwei gegenüber Isocyanaten reaktiven Gruppen und mindestens einem Kettenverlängerer, der eine gegenüber Isocyanaten reaktive Gruppe und mindestens eine Endgruppe (EG2) aufweist.

Gemäß einer Ausführungsform der vorliegenden Erfindung werden als weiterer Kettenverlängerer Diole mit einem Molekulargewicht von <350g/mol eingesetzt.

Dabei können weiter bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 12 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol und 1,6-Hexandiol.

Auch verzweigte Verbindungen wie 1,4-Cyclohexyldimethanol, 2-Butyl-2-ethylpopandiol, Neopentylglykol, 2,2,4-Trimethyl-1,3-pentanediol, Pinakol, 2-Ethyl-1,3-hexandiol, 1,4-Cyclohexandiol, oder N-Phenyldiethanolamin sind im Rahmen der vorliegenden Erfindung als Kettenverlängerer geeignet. Ebenfalls geeignet sind Verbindungen mit OH und NH Gruppen wie beispielsweise 4-Aminobutanol.

Erfindungsgemäß können auch Mischungen mehrerer Kettenverlängerer eingesetzt werden.

Im Rahmen der vorliegenden Erfindung kann die eingesetzte Menge des Kettenverlängerers und der Polyolzusammensetzung in weiten Bereichen variieren. Beispielsweise kann im Rahmen der vorliegenden Erfindung der Kettenverlängerer in einer Menge im Bereich von 1:40 bis 10:1 bezogen auf das eingesetzte Polyol eingesetzt werden.

Erfindungsgemäß enthält die Polyolzusammensetzung mindestens ein Polyol. Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegt vorzugsweise zwischen 0,5×10³g/mol und 8 ×10³ g/mol, bevorzugt zwischen 0,6 ×10³ g/mol und 5 ×10³ g/mol, insbesondere zwischen 0,8 ×10³ g/mol und 3 ×10³ g/mol.

Erfindungsgemäß sind Polyetherole geeignet, aber auch Polyesterole, Blockcopolymere sowie Hybrid Polyole wie z.B. Poly(ester/amid). Bevorzugte Polyole sind erfindungsgemäß Polytetramethylenetherglykol, Polyethylenglykole, Polypropylenglykole, Polyadipate, Polycarbonat(diol)e und Polycaprolacton.

Gemäß einer weiteren Ausführungsform betrifft die vorliegende Erfindung auch die Verwendung einer Zusammensetzung wie zuvor beschrieben, wobei die Polyolzusammensetzung ein Polyol ausgewählt aus der Gruppe bestehend aus Polyethern, Polyestern, Polycaprolactonen und Polycarbonaten enthält.

Geeignete Polyole sind beispielsweise Polyetherole wie Polytrimethylenoxid oder Polytetramethylenoxid.

Geeignete Blockcopolymere sind beispielsweise solche, die Ether und Esterblöcke aufweisen, wie beispielsweise Polycaprolacton mit Polyethylenoxid oder Polypropylenoxid-Endblöcken oder auch Polyether mit Polycaprolactonendblöcken. Bevorzugte Polyetherole sind erfindungsgemäß Polyethyleneglykole, Polypropylenglykole. Weiterhin bevorzugt ist Polycaprolacton.

Gemäß einer besonders bevorzugten Ausführungsform weist das eingesetzte Polyol ein zahlenmittleres Molekulargewicht Mn im Bereich von 500 g/mol bis 4000 g/mol auf, bevorzugt im Bereich von 800 g/mol bis 3000 g/mol.

Erfindungsgemäß können auch Mischungen verschiedener Polyole eingesetzt werden. Bevorzugt haben die eingesetzten Polyole bzw. die Polyolzusammensetzung eine mittlere Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß kann das eingesetzte Polyol auch weitere Gruppen aufweisen, beispielsweise geeignete Endgruppen (EG2). Es ist jedoch im Rahmen der vorliegenden Erfindung auch möglich, dass Polyolmischungen eingesetzt werden, enthaltend mindestens ein Polyol ohne Endgruppen (EG1) und (EG2) und mindestens ein Polyol, das mindestens eine Endgruppe (EG2) aufweist.

Erfindungsgemäß kann die Polyolzusammensetzung auch ein Lösungsmittel enthalten. Geeignete Lösungsmittel sind dem Fachmann an sich bekannt.

Erfindungsgemäß wird zur Herstellung des thermoplastischen Polyurethans eine Polyisocyanatzusammensetzung eingesetzt.

Bevorzugte Polyisocyanate sind im Rahmen der vorliegenden Erfindung Diisocyanate, insbesondere aliphatische oder aromatische Diisocyanate.

Des Weiteren können im Rahmen der vorliegenden Erfindung vorreagierte Produkte als Isocyanatkomponenten eingesetzt werden, bei denen ein Teil der OH-Komponenten in einem vorgelagerten Reaktionsschritt mit einem Isocyanat zur Reaktion gebracht wird. Die erhaltenen Produkte werden in einem nachfolgenden Schritt, der eigentlichen Polymerreaktion, mit den restlichen OH-Komponenten zur Reaktion gebracht und bilden dann das thermoplastische Polyurethan.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI).

Geeignete aromatische Diisocyanate sind insbesondere 1,5-Naphthylendiisocyanat (NDI), 2,4- und/oder 2,6-Toluylendiisocyanat (TDI), 2,2'-, 2,4'- und/oder 4,4'-Diphenylmethandiisocyanat (MDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethandiisocyanat und/oder Phenylendiisocyanat.

Gemäß einer weiteren Ausführungsform betrifft die vorliegende Erfindung auch die Verwendung einer Zusammensetzung wie zuvor beschrieben, wobei die Isocyanatzusammensetzung mindestens ein Isocyanat ausgewählt ist aus der Gruppe bestehend aus 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI), und 1-Isocyanato-3,3,5-trimethyl-5-isocyanatomethyl-cyclohexan (Isophoron-diisocyanat, IPDI) oder Derivaten dieser Isocyanate enthält.

Im Rahmen der vorliegenden Erfindung ist es auch möglich, dass höherfunktionelle Isocyanate eingesetzt werden, beispielsweise Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurethe der vorgenannten Diisocyanate, ferner Oligomere, die durch gezielte Umsetzung von semiblockierten Diisocyanaten mit Polyolen, die im Mittel mehr als zwei und vorzugsweise drei oder mehr Hydroxy-Gruppen aufweisen, erhältlich sind.

Erfindungsgemäß kann das eingesetzte Isocyanat auch weitere Gruppen aufweisen, beispielsweise geeignete Endgruppen (EG1). Es ist jedoch im Rahmen der vorliegenden Erfindung auch möglich, dass Isocyanatmischungen eingesetzt werden, enthaltend mindestens ein Isocyanat ohne Endgruppen (EG1) und (EG2) und mindestens ein Isocyanat, das mindestens eine Endgruppe (EG1) aufweist.

Erfindungsgemäß kann die Polyisocyanatzusammensetzung auch ein oder mehrere Lösungsmittel enthalten. Geeignete Lösungsmittel sind dem Fachmann bekannt. Geeignet sind beispielsweise nicht reaktive Lösungsmittel wie Ethylacetat, Methylethylketon und Kohlenwasserstoffe.

Weiter können im Rahmen der vorliegenden Erfindung auch Vernetzer eingesetzt werden, beispielsweise die zuvor genannten höherfunktionellen Polyisocyanate oder Polyole oder auch andere höherfunktionale Moleküle mit mehreren gegenüber Isocyanaten reaktiven funktionellen Gruppen. Ebenso ist es im Rahmen der vorliegenden Erfindung möglich, eine Vernetzung der Produkte durch einen Überschuss der eingesetzten Isocyanatgruppen im Verhältnis zu den Hydroxylgruppen zu erreichen.

Erfindungsgemäß werden die Komponenten (i) und (ii) in einem Verhältnis eingesetzt, so dass das molare Verhältnis aus der Summe der Funktionalitäten der eingesetzten Polyolzusammensetzung einschließlich Kettenverlängerer zu der Summe der Funktionalitäten der eingesetzten Isocyanatzusammensetzung im Bereich von 0,5 zu 1 bis 3 zu 1 liegt, beispielsweise im Bereich von 0,8 bis 1 bis 1,3 zu 1 liegt. Bevorzugt liegt das Verhältnis im Bereich von 0,9 zu 1 bis 1,2 zu 1, weiter bevorzugt im Bereich von 0,965 zu 1 bis 1,05 zu 1, besonders bevorzugt im Bereich von 0,98 zu 1 bis 1,03 zu 1. Unter der Summe der Funktionalitäten wird im Rahmen der vorliegenden Erfindung die Summe der reaktiven Gruppen und der blockierten Gruppen, d.h. der Endgruppen (EG1) und (EG2) verstanden.

Erfindungsgemäß ist es auch möglich, dass die die Komponenten (i) und (ii) in einem Verhältnis eingesetzt werden, so dass das molare Verhältnis aus der Summe der freien Funktionalitäten der eingesetzten Polyolzusammensetzung einschließlich Kettenverlängerer zu der Summe der freien Funktionalitäten der eingesetzten Isocyanatzusammensetzung im Bereich von 0,5 zu 1 bis 3 zu 1 liegt, beispielsweise im Bereich von 0,8 bis 1 bis 1,3 zu 1 liegt. Bevorzugt liegt das Verhältnis im Bereich von 0,9 zu 1 bis 1,2 zu 1, weiter bevorzugt im Bereich von 0,965 zu 1 bis 1,05 zu 1, besonders bevorzugt im Bereich von 0,98 zu 1 bis 1,03 zu 1. Unter der Summe der freien Funktionalitäten wird im Rahmen der vorliegenden Erfindung die Summe der reaktiven Gruppen verstanden.

Das Molekulargewicht des erfindungsgemäßen thermoplastischen Polyurethans (TPU1) kann in weiten Bereichen variieren. Besonders vorteilhaft weist das thermoplastische Polyurethan (TPU1) ein Molekulargewicht im Bereich von 2000 bis 50000 g/mol, bestimmt mittels GPC, auf, weiter bevorzugt im Bereich von 5000 bis 40000 g/mol. Gemäß einer weiteren Ausführungsform betrifft die vorliegende Erfindung auch die Verwendung einer Zusammensetzung wie zuvor beschrieben, wobei das thermoplastische Polyurethan ein Molekulargewicht im Bereich von 2000 bis 50000 g/mol, bestimmt mittels GPC, aufweist.

Erfindungsgemäß können bei der Umsetzung der Komponenten (i) und (ii) weitere Additive zugesetzt werden, beispielsweise Katalysatoren oder Hilfs- und Zusatzstoffe. Zusatzstoffe und Hilfsmittel sind dem Fachmann an sich bekannt. Erfindungsgemäß können auch Kombinationen aus mehreren Additiven eingesetzt werden.

Im Rahmen der vorliegenden Erfindung werden unter dem Begriff Additiv insbesondere Katalysatoren, Hilfsstoffe und Zusatzstoffe verstanden, insbesondere Stabilisatoren, Nukleationsmittel, Trennmittel, Entformungshilfen, Füllstoffe, Flammschutzmittel oder Vernetzer.

Geeignete Additive bzw. Zusatzstoffe sind beispielsweise Stabilisatoren, Nukleationsmittel, Füllstoffe wie z.B. Silikate oder Vernetzer wie z.B. mehrfunktionale Alumosilikate.

Als Hilfs- und Zusatzstoffe genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Katalysatoren sind ebenfalls grundsätzlich aus dem Stand der Technik bekannt und betreffen insbesondere die Reaktion von Nucleophilen mit Isocyanaten aber auch die Deblockierungsreatkion. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Bismuthverbindungen, wie Bismuthalkylverbindungen oder ähnliche, oder Eisenverbindungen, bevorzugt Eisen-(MI)-acetylacetonat oder die Metallsalze der Carbonsäuren wie z.B. Zinn-II-isooctoat, Zinndioctoat, Titansäureester oder Bismut-(III)-neodecanoat.

Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 0 bis 2000 ppm, bevorzugt 1 ppm bis 1000 ppm, weiter bevorzugt 2 ppm bis 500 ppm und am meisten bevorzugt von 5 ppm bis 300 ppm eingesetzt.

Ein geeignetes Verfahren zur Herstellung einer Zusammensetzung (Z1) enthaltend ein thermoplastisches Polyurethan, umfasst die Umsetzung mindestens der Komponenten (i) und (ii):
(i) mindestens eine Polyisocyanatzusammensetzung,
(ii) mindestens eine Polyolzusammensetzung,

wobei die Polyisocyanatzusammensetzung ein Isocyanat (I1) enthält, das Endgruppen (EG1) aufweist, die bei einer Temperatur (T1) unter Bildung von reaktiven Gruppen abgespalten werden können,
   oder
wobei die Polyolzusammensetzung ein Polyol enthält, das Endgruppen (EG2) aufweist, die bei einer Temperatur (T2) unter Bildung von reaktiven Gruppen abgespalten werden können,
   oder
wobei die Polyisocyanatzusammensetzung ein Isocyanat (I1) enthält, das Endgruppen (EG1) aufweist, und die Polyolzusammensetzung ein Polyol enthält, das Endgruppen (EG2) aufweist, die bei einer Temperatur (T1) bzw. (T2) unter Bildung von reaktiven Gruppen abgespalten werden können,
wobei die Temperatur (T1) und die Temperatur (T2) jeweils größer oder gleich 60°C ist,
und die Umsetzung der Komponenten (i) und (ii) bei einer Temperatur erfolgt, die niedriger ist als die Temperatur (T1) und die Temperatur (T2).

So ist es zum einen möglich, dass die Polyisocyanatzusammensetzung ein Isocyanat (11) enthält, das Endgruppen (EG1) aufweist, die bei einer Temperatur (T1) unter Bildung von reaktiven Gruppen abgespalten werden können. Der Anteil der Endgruppen (EG1) kann dabei in geeigneten Bereichen variieren. Beispielsweise sind im Rahmen der vorliegenden Erfindung 0,01% bis 40mol% und bevorzugt 1 bis 25 mol% der Isocyanatgruppen in (11) mit Endgruppen (EG1) blockiert.

Eine geeignete Isocyanatzusammensetzung ist beispielsweise erhältlich, indem ein Isocyanat mit einer geeigneten Menge einer Verbindung umgesetzt wird, die mit einer Isocyanatgruppe eine Endgruppe (EG) bildet.

Weiterhin ist es möglich, dass die Polyolzusammensetzung ein Polyol enthält, das Endgruppen (EG2) aufweist, die bei einer Temperatur (T2) unter Bildung von reaktiven Gruppen abgespalten werden können. Erfindungsgemäß kann dabei auch der Kettenverlängerer Endgruppen (EG2) aufweisen. Der Anteil der Endgruppen (EG2) kann dabei in geeigneten Bereichen variieren. Beispielsweise sind im Rahmen der vorliegenden Erfindung 0,01mol% bis 40mol% und bevorzugt 1mol% bis 25 mol% der reaktiven Gruppen des Polyols und/oder des Kettenverlängerers mit Endgruppen (EG2) blockiert.

Weiterhin ist es möglich, dass die Polyisocyanatzusammensetzung ein Isocyanat (11) enthält, das Endgruppen (EG1) aufweist, und die Polyolzusammensetzung ein Polyol enthält, das Endgruppen (EG2) aufweist, die bei einer Temperatur (T1) bzw. (T2) unter Bildung von reaktiven Gruppen abgespalten werden können.

So betrifft die vorliegende Erfindung auch die Verwendung einer Zusammensetzung enthaltend ein thermoplastisches Polyurethan erhältlich gemäß einem Verfahren umfassend die Umsetzung mindestens der Komponenten (i) und (ii):
(i) mindestens eine Polyisocyanatzusammensetzung,
(ii) mindestens eine Polyolzusammensetzung,

wobei die Polyisocyanatzusammensetzung ein Isocyanat (11) enthält, das Endgruppen (EG1) aufweist, die bei einer Temperatur (T1) unter Bildung von reaktiven Gruppen abgespalten werden können, oder wobei die Polyolzusammensetzung ein Polyol enthält, das Endgruppen (EG2) aufweist, die bei einer Temperatur (T2) unter Bildung von reaktiven Gruppen abgespalten werden können, wobei die Polyisocyanatzusammensetzung ein Isocyanat (11) enthält, das Endgruppen (EG1) aufweist, und die Polyolzusammensetzung ein Polyol enthält, das Endgruppen (EG2) aufweist, die bei einer Temperatur (T1) bzw. (T2) unter Bildung von reaktiven Gruppen abgespalten werden können,
und wobei die Temperatur (T1) und die Temperatur (T2) jeweils größer oder gleich 60°C ist,
und die Umsetzung der Komponenten (i) und (ii) bei einer Temperatur erfolgt, die niedriger ist als die Temperatur (T1) und die Temperatur (T2),
zur Herstellung eines Formkörpers, wobei die Herstellung des Formkörpers mittels pulverbasierter Schichtbauverfahren erfolgt.

Geeignete Verbindungen zur Bildung der Endgruppen (EG1) bzw. (EG2) sind dem Fachmann an sich bekannt.

Zur Blockierung von Isocyanatgruppen geeignete Verbindungen sind beispielsweise ausgewählt aus der Gruppe bestehend aus Phenolen, tertiären Alkoholen, aktiven Methylenverbindungen, Aminen, Amiden, Imiden, Lactamen, Oximen, Thiolen, Azolen, Imidazolen und Pyrazolen. Beispiele sind Monophenole wie beispielsweise Phenol, Cresole, Trimethylphenole und tert Butyl phenole; tertiäre Alkohole wie beispielsweise tert Butanol, tert Amylalkohol und Dimethylphenyl carbonyl; Verbindungen, die leicht Enole bilden wie beispielsweise Acetoessigester, Acetylaceton und Malonsäurederivate, beispielsweise Malonsäurediethylester; sekundäre aromatische Amine wie N-methylanilin, N-methyl toluidine, N-phenyl toluidin und N-phenyl xyliden; Amide wie beispielsweise Methylacetamid und Acetanilid; Imides wie beispielsweise Succinimid; Lactame wie beispielsweise ε-Caprolactam, Laurolactam und δ-Valerolactam; Oxime wie beispielsweise Acetonoxime, Butanonoxime, beispielsweise Methyl-Ethyl-Ketonoxim und Cyclohexanonoxime; Mercaptane wie beispielsweise Methylmercaptan, Ethyl mercaptan, Butyl mercaptan, 2-Mercapto-benzothiazole, α-Naphthyl mercaptan und Dodecyl mercaptan; Triazole wie beispielsweise 1H-1,2,4-Triazole; Imidazole wie beispielsweise Ethyl imidazol und Pyrazole wie beispielsweise 3,5-Dimethylpyrazol.

Blockierungsmittel für Hydroxygruppen sind dem Fachmann grundsätzlich bekannt und beispielsweise beschrieben im "Protective Groups in Organic Synthesis ", John Wiley & Sons, Inc. 3. Auflage 1999, Kapitel 2. Bei typischen Blockierungsgruppen von Polyolen handelt es sich um Tetrahydropyranyl, Tetrahydrothiopyranyl, 4-Methoxytetrahydropyranyl, 4-Methoxytetrahydrothiopyranyl, tert-Alkyl, insbesondere tert-Butyl, Alkylcarbamate und A-rylcarbamate.

So ist es auch möglich, dass das eingesetzte Isocyanat ein Prepolymer ist.

Dabei ist es beispielsweise möglich, dass zunächst aus dem Isocyanat und einem geeigneten Polyol ein Prepolymer erhalten wird, das dann mit einem geeigneten Blockierungsmittel umgesetzt wird, um geeignete Endgruppen (EG1) und/oder (EG2) im Prepolymer zu erzeugen. Das derart erhaltene Prepolymer mit Endgruppen (EG1) und/oder (EG2) kann dann üblicherweise mit der Polyolzusammensetzung umgesetzte werden.

Ebenso ist es möglich, dass eine oder mehrere der Aufbaukomponenten vor der Umsetzung zum thermoplastischen Polyurethan mit einem geeigneten Blockierungsmittel umgesetzt werden, so dass ein Teil der reaktiven Gruppen der jeweiligen Aufbaukomponente zu Endgruppen (EG1) und/oder (EG2) reagiert. Die derart vorbehandelten Aufbaukomponenten, die Endgruppen (EG1) und/oder (EG2) aufweisen, können im Rahmen der vorliegenden Erfindung eingesetzt werden, wobei erfindungsgemäß auch Mischungen von Aufbaukomponenten mit geeigneten Endgruppen und solchen, die keine Endgruppen (EG1) und (EG2) aufweisen, eingesetzt werden können.

Bezüglich der Zusammensetzung der Isocyanatzusammensetzung und der Polyolzusammensetzung wird auf die obigen Ausführungen verwiesen.

Erfindungsgemäß ist das thermoplastische Polyurethan zumindest im Temperaturbereich unter 50°C fest. Dies ermöglicht es, dass das thermoplastische Polyurethan als Pulver verarbeitet werden kann, beispielsweise in Form eines Pulvers mit einer mittleren Partikelgröße d50 im Bereich von 10 bis 500 µm.

Gemäß einer weiteren Ausführungsform betrifft die vorliegende Erfindung auch die Verwendung einer Zusammensetzung enthaltend ein thermoplastisches Polyurethan wie zuvor beschrieben, wobei das thermoplastische Polyurethan in Form eines Pulvers mit einer mittleren Partikelgröße d50 im Bereich von 10 bis 500 µm vorliegt.

Bevorzugt liegt das thermoplastische Polyurethan als Pulver mit einer mittleren Partikelgröße d50 im Bereich von 25 bis 400 µm vor, weiter bevorzugt mit einer mittleren Partikelgröße d50 im Bereich von 40 bis 300 µm.

Die Eigenschaften der erfindungsgemäß eingesetzten thermoplastischen Polyurethane können je nach Anwendung in weiten Bereichen variieren. Überraschender weise hat sich gezeigt, dass die erfindungsgemäß verwendeten Zusammensetzungen besonders gut in pulverbasierten Verarbeitungsverfahren eingesetzt werden können.

Erfindungsgemäß wird die Zusammensetzung (Z1) enthaltend das thermoplastisches Polyurethan oder das erfindungsgemäße thermoplastische Polyurethan in Form von schüttfähigen Partikeln eingesetzt, beispielsweise in Form eines Pulvers, insbesondere in Form eines Pulvers mit einer mittleren Partikelgröße d50 im Bereich von 10 bis 500 µm.

Verfahren zur Bestimmung von Partikelgrößen sind dem Fachmann hinlänglich bekannt. In Abhängigkeit der Partikelgröße eignet sich zum Beispiel die elektrische Mobilitätsanalyse, Laserbeugung, Siebanalyse, Lichtmikroskopie oder die dynamische Lichtstreuung zur Bestimmung von Partikelgrößen, bzw. Partikelgrößenverteilung. Soweit nicht anders angegeben werden im Rahmen der vorliegenden Erfindung Partikelgrößen mittels Laserbeugung nassdispergierter Pulver bestimmt.

Die vorliegende Erfindung betrifft die Verwendung einer Zusammensetzung wie zuvor beschrieben zur Herstellung eines Formkörpers.

Dabei betrifft die vorliegende Erfindung auch die Verwendung wie zuvor beschrieben, wobei die Herstellung des Formkörpers mittels pulverbasierter Schichtbauverfahren erfolgt.

Hierbei werden üblicherweise über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als bei herkömmlichen Verfahren. Beispiele für pulverbasierte Schichtbauverfahren sind das sogenannte Lasersintern oder das High-Speed Sintering (HSS). Beim Lasersinterverfahren erfolgt der Energieeintrag über einen gelenkten Laserstrahl. Beim so genannten High-Speed Sintering (HSS)- Verfahren erfolgt der Energieeintrag über Infrarot(IR)strahlen in Kombination mit einem selektiv in das Pulverbett gedruckten IR-Absorbers.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Kurze Beschreibung der Figuren:
- Fig. 1: zeigt GPC Kurven der gemäß Anwendungsbeispiel 1a erhaltenen Polyurethane, wobei das Molekulargewicht in g/mol auf der x-Achse aufgetragen ist und die normierte Intensität in % auf der y-Achse.
- Fig. 2: zeigt GPC Kurven der gemäß Anwendungsbeispiel 1b erhaltenen Polyurethane, wobei das Molekulargewicht in g/mol auf der x-Achse aufgetragen ist und die normierte Intensität in % auf der y-Achse.
- Fig. 3: zeigt GPC Kurven der gemäß Anwendungsbeispiel 2a erhaltenen Polyurethane, wobei das Molekulargewicht in g/mol auf der x-Achse aufgetragen ist und die normierte Intensität in % auf der y-Achse.
- Fig. 4: zeigt GPC Kurven der gemäß Anwendungsbeispiel 2b erhaltenen Polyurethane, wobei das Molekulargewicht in g/mol auf der x-Achse aufgetragen ist und die normierte Intensität in % auf der y-Achse.
- Fig. 5: zeigt GPC Kurven der gemäß Anwendungsbeispiel 2c erhaltenen Polyurethane, wobei das Molekulargewicht in g/mol auf der x-Achse aufgetragen ist und die normierte Intensität in % auf der y-Achse.
- Fig. 6: zeigt GPC Kurven der gemäß Anwendungsbeispiel 2d erhaltenen Polyurethane, wobei das Molekulargewicht in g/mol auf der x-Achse aufgetragen ist und die normierte Intensität in % auf der y-Achse.

Die nachfolgenden Beispiele dienen der Veranschaulichung der Erfindung.

### BEISPIELE

### 1. Einsatzstoffe:

| | |
|---|---|
| Isocyanat 1: | ist 4,4'-Diphenylmethandiisocyanat (4,4'-MDI), Molmasse 250,26 g/mol |
| Isocyanat 2: | ist eine Mischung aus 4,4'-Diphenylmethandiisocyanat (4,4'-MDI; Molmasse 250,26 g/mol), N-[4-[(4-isocyanatophenyl)methyl]phenyl]-2-oxo-azepane-1-carboxamide (1CL-4,4'-MDI; Molmasse 363,41 g/mol) und 2-oxo-N-[4-[[4-[(2-oxoazepane-1-carbonyl)amino]phenyl]methyl]phenyl] azepane-1-carboxamide (2CL-4,4'-MDI; Molmasse 476,24 g/mol) mit einem NCO-Wert von 18,5% |
| Isocyanat 3: | ist eine Mischung aus 4,4'-Diphenylmethandiisocyanat (4,4'-MDI; Molmasse 250,26 g/mol), (1-methylpropylideneamino) N-[4-[(4-isocyanatophenyl)methyl]phenyl]carbamate (1MEKO-4,4'-MDI; Molmasse 339,39 g/mol) und (1-methylpropylideneamino) N-[4-[[4-[1-methylpropylideneamino]oxycarbonylamino]phenyl]methyl]phenyl] carbamate (2MEKO-4,4'-MDI; Molmasse 424,49 g/mol) mit einem NCO-Wert von 19,4% |
| Polymerpolyol 1: | Polyetherdiol mit OH-Zahl von etwa 112 aufgebaut aus Tetrahydrofuran (MW: ca. 1000) |
| Polymerpolyol 2: | Polyetherdiol mit OH-Zahl von etwa 56 aufgebaut aus Tetrahydrofuran (MW: ca. 2000) |
| Kettenverlängerer 1: | ist 1,4-Butandiol, Molmasse 90,12 g/mol |
| Kettenverlängerer 2: | ist 1,6-Hexandiol, Molmasse 118,18 g/mol |

### 2. Erfindungsgemäße Beispiele:

Es wurde überraschenderweise gefunden, dass durch die Verwendung von blockierten-Isocyanaten in einem Prepolymer-Verfahren oder als Co-Isocyanate in einem *one-shot-*Verfahren in Gegenwart freier Kettenverlängerer feste Polyurethane herstellbar sind, die bei Temperaturen > 100°C, bevorzugt bei Temperaturen > 150°C Molekulargewicht aufbauen.

### 2.1 Beispiel 1

**Tabelle 1: Rezepturen 1a und 1b**

| | **Vergleich 1a** | **Vergleich 1b** |
|---|---|---|
| Isocyanat 1 [g] | 27,7 | 27,2 |
| Polymerpolyol 1 [g] | 19,4 | 19,1 |
| Polymerpolyol 2 [g] | 38,8 | 38,2 |
| Caprolactam [g] | 7,3 | 7,2 |
| Kettenverlängerer 1 [g] | 6,9 | |
| Kettenverlängerer 2 [g] | | 8,2 |

### 2.1.1 Beispiel 1a

### Herstellung des Prepolymeren

Isocyanat 1 wird bei 60 °C in einem 250 ml Vierhalshalskolben, versehen mit Thermoelement PT100, Stickstoffeinleitung, Rührer und Heizhaube, vorgelegt und Polymerpolyol 1 und 2 bei dieser Temperatur hinzugefügt. Das Reaktionsgemisch wurde auf 80 °C erhitzt und während 2 Stunden bei 80 °C gerührt. Anschließend wurde zu diesem Reaktionsgemisch portionsweise Caprolactam hinzugefügt und für weitere 2 h gerührt. Dieses resultierende Prepolymer wurde nun auf Raumtemperatur abgekühlt und ohne weitere Behandlung für die folgende Anwendung verwendet.

### Herstellung des Polyurethans auf Basis vom Prepolymeren

Das resultierende Prepolymer wurde in einem Becherglas oder Weißblechgebinde mit Kettenverlängerer 1 unter Rühren bei 80°C umgesetzt und es wurde eine weiße feste Masse erhalten.

### 2.1.2 Beispiel 1b

### Herstellung des Prepolymeren

Isocyanat 1 wird bei 60 °C in einem 250 ml Vierhalshalskolben, versehen mit Thermoelement PT100, Stickstoffeinleitung, Rührer und Heizhaube, vorgelegt und Polymerpolyol 1 und 2 bei dieser Temperatur hinzugefügt. Das Reaktionsgemisch wurde auf 80 °C erhitzt und während 2 Stunden bei 80 °C gerührt. Anschließend wurde zu diesem Reaktionsgemisch portionsweise Caprolactam hinzugefügt und für weitere 2 h gerührt. Dieses resultierende Prepolymer wurde nun auf Raumtemperatur abgekühlt und ohne weitere Behandlung für die folgende Anwendung verwendet.

### Herstellung des Polyurethans auf Basis von Prepolymeren

Das resultierende Prepolymer wurde in einem Becherglas oder Weißblechgebinde mit Kettenverlängerer 2 unter Rühren bei 80°C umgesetzt und es wurde eine weiße feste Masse erhalten.

### 2.1.3 Anwendung der Beispiele zu 1

### Anwendungsbeispiel 1a

Das aus Beispiel 1a erhaltene, feste Material wurde während 5 min bei 200°C behandelt. Die Analyse mittels Gelpermeationschromatographie (GPC) vorher (1a-1) und nachher (1a-2) untersucht und es wurde ein Molekulargewichtsaufbau beobachtet.

Darüber hinaus wurde das aus Beispiel 1a erhaltene Material zunächst bei 80°C während 15h getempert, anschließend während 5 min bei 200°C behandelt und im Nachgang noch 20h bei 100°C getempert (1a-3).

**Tabelle 2**

| Beispiel | Bedingungen/weitere Behandlung | Molekulargewicht (Mw) [g/mol] |
|---|---|---|
| 1a-1 | - | 7000 |
| 1a-2 | 5 min bei 200°C | 19000 |
| 1a-3 | 15 h bei 80°C; 5 min bei 200°C; 20h bei 100°C | 66000 |

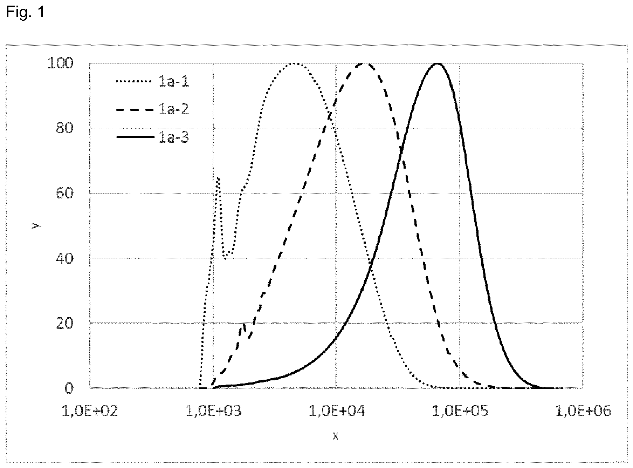

Die Ergebnisse der GPC-Messungen sind in Figur 1 wiedergegeben.

### Anwendungsbeispiel 1b

Das aus Beispiel 1a erhaltene, feste Material wurde während 5 min bei 200°C behandelt. Die Analyse mittels Gelpermeationschromatographie (GPC) vorher (1b-1) und nachher (1b-2) untersucht und es wurde ein Molekulargewichtsaufbau beobachtet.

Darüber hinaus wurde das aus Beispiel 1a erhaltene Material zunächst bei 80°C während 15h getempert, anschließend während 5 min bei 200°C behandelt und im Nachgang noch 20h bei 100°C getempert (1b-3).

**Tabelle 3**

| Beispiel | Bedingungen/weitere Behandlung | Molekulargewicht (Mw) [g/mol] |
|---|---|---|
| 1b-1 | - | 9900 |
| 1b-2 | 5 min bei 200°C | 30000 |
| 1b-3 | 15 h bei 80°C; 5 min bei 200°C; 20h bei 100°C | 66000 |

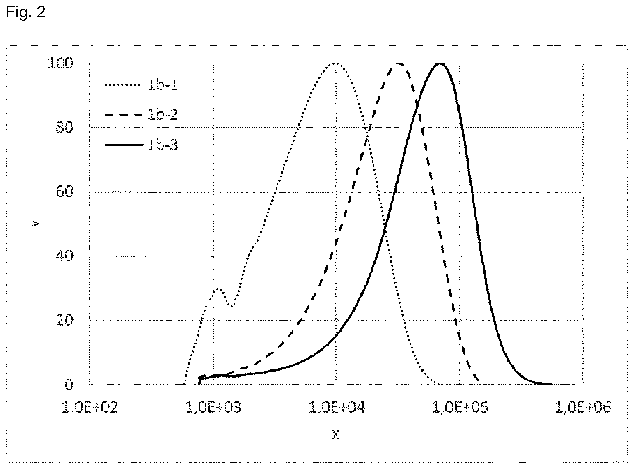

Die Ergebnisse der GPC-Messungen sind in Figur 2 wiedergegeben.

### 2.2 Beispiel 2

### 2.2.1 Herstellung des Isocyanat 2

Isocyanat 1 (78.6g) wurde bei 60 °C in einem Rundhalskolben, versehen mit Thermoelement PT100, Stickstoffeinleitung, Rührer und Heizhaube, vorgelegt und Caprolactam (21.4g) bei dieser Temperatur hinzugefügt. Das Reaktionsgemisch wurde auf 80 °C erhitzt und während 45 min bei 80 °C gerührt. Anschließend wurde dieses dabei erhaltene Isocyanat 2 auf Raumtemperatur abgekühlt und ohne weitere Behandlung für die Umsetzung mit Polymerpolyol und Kettenverlängerer verwendet (berechneter NCO: 18,5%).

### Allgemeines Verfahren zur Herstellung des festen Polyurethans im one-shot-Verfahren

Das Polymerpolyol 1 wird zusammen mit Kettenverlängerer 2, Isocyanat 1 und Isocyanat 2 unter Rühren zur Reaktion gebracht. Die resultierende Reaktionsmischung wird auf einen beheizbaren ggf. teflonbeschichteten Tisch ausgegossen und für ca. 60 Minuten bei 120 °C ausreagiert. Die so erhaltene Polymerplatte wird dann bei 80 °C für 15 Stunden getempert.

**Tabelle 4: Rezepturen 2a-2d**

| | **Vergleich 2a** | **Vergleich 2b** | **Vergleich 2c** | **Vergleich 2d** |
|---|---|---|---|---|
| Isocyanat 1 [g] | 13,1 | 26,1 | 39,1 | 46,8 |
| Isocyanat 2 [g] | 49,7 | 33,3 | 16,7 | 6,8 |
| Polymerpolyol 1 [g] | 83,0 | 83,0 | 83,0 | 83,0 |
| Kettenverlängerer 2 [g] | 14,8 | 14,8 | 14,8 | 14,8 |

### 2.2.2 Anwendung der Beispiele zu 2

### Anwendungsbeispiele 2a-2d

Das aus Beispiel 2a-d erhaltene, feste Material wurde jeweils mittels Gelpermeationschromatographie (GPC) untersucht. Anschließend wurde Beispiel 2a-d während 5 min bei 200°C behandelt und im Nachgang noch 20h bei 100°C getempert. Zusätzlich wurde das Material bei 100°C für 20h gelagert.

**Tabelle 5**

| | | **Molekulargewichte (Mw) [g/mol]** | | | |
|---|---|---|---|---|---|
| Bedingungen/weitere Behandlung | | **Vergleich 2a** | **Vergleich 2b** | **Vergleich 2c** | **Vergleich 2d** |
| (1) | - | 6000 | 9200 | 20000 | 29000 |
| (2) | 20h bei 100°C | 9300 | 13000 | 28000 | 35000 |
| (3) | 5 min bei 200°C; 20h bei 100°C | 69000 | 62000 | 88000 | 59000 |

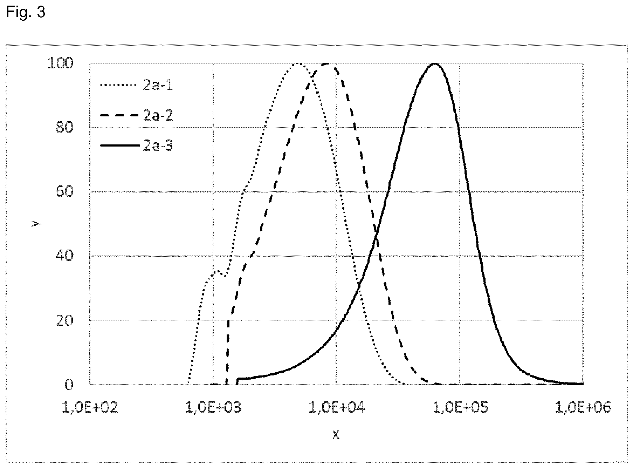

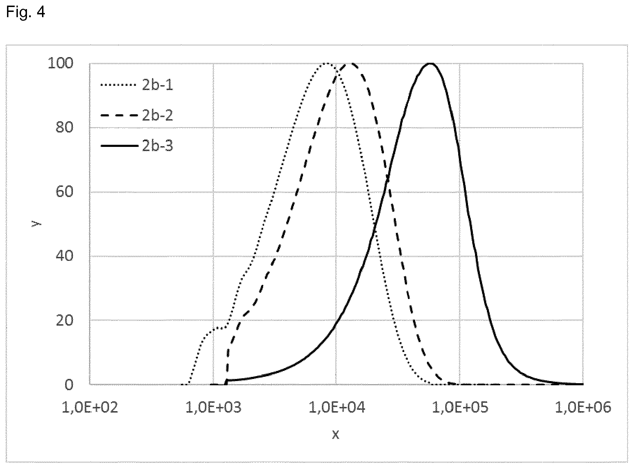

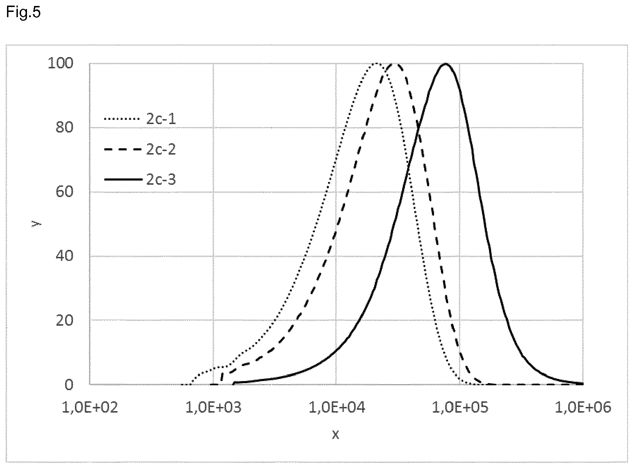

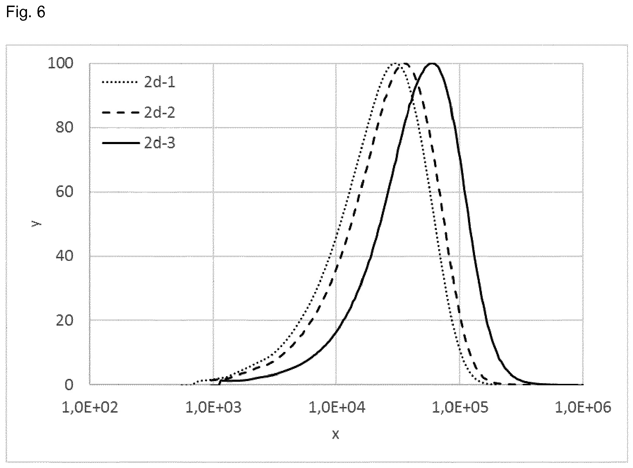

Die Ergebnisse der GPC-Messungen für die Beispiele 2a bis 2d sind in Figur 3 bis 6 wiedergegeben.

### 2.3 Beispiel 3

### 2.3.1 Herstellung des Isocyanat 3

Isocyanat 1 (1,179 kg) wurde bei 60 °C in einem Rundhalskolben, versehen mit Thermoelement PT100, Stickstoffeinleitung, Rührer und Heizhaube, vorgelegt und Methyl-Ethyl-Ketonoxim (0,247 kg) bei dieser Temperatur hinzugefügt. Das Reaktionsgemisch wurde auf 80 °C erhitzt und während 60 min bei 80 °C gerührt. Anschließend wurde dieses dabei erhaltene Isocyanat 3 auf Raumtemperatur abgekühlt und ohne weitere Behandlung für die Umsetzung mit Polymerpolyol und Kettenverlängerer verwendet (berechneter NCO: 19,4%).

### Allgemeines Verfahren zur Herstellung des festen Polyurethans im one-shot-Verfahren

Das Polymerpolyol 1 wird zusammen mit Kettenverlängerer 2, Isocyanat 1 und Isocyanat 3 unter Rühren zur Reaktion gebracht. Die resultierende Reaktionsmischung wird auf einen beheizbaren ggf. teflonbeschichteten Tisch ausgegossen und für ca. 60 Minuten bei 120 °C ausreagiert. Die so erhaltene Polymerplatte wird dann bei 80 °C für 15 Stunden getempert.

**Tabelle 6: Rezeptur 3**

| | **Vergleich 3** |
|---|---|
| Isocyanat 1 [g] | 569,1 |
| Isocyanat 3 [g] | 78,1 |
| Polymerpolyol 1 [g] | 1000,0 |
| Kettenverlängerer 2 [g] | 179,3 |

### 2.3.2 Anwendung des Beispiels zu 3

### Anwendungsbeispiel 3

Das aus Beispiel 3 erhaltene, feste Material wurde jeweils mittels Gelpermeationschromatographie (GPC) untersucht. Anschließend wurde Beispiel 3 während 5 min bei 200°C behandelt und im Nachgang noch 20h bei 100°C getempert. Zusätzlich wurde das Material bei unterschiedlichen Temperaturen für 20-24h gelagert.

**Tabelle 7**

| | | **Molekulargewichte (Mw) [g/mol]** |
|---|---|---|
| Bedingungen/weitere Behandlung | | **Vergleich 3** |
| (1) | - | 44000 |
| (2) | 24h bei 60°C | 45000 |
| (3) | 24h bei 80°C | 51000 |
| (4) | 20h bei 100°C | 96000 |
| (5) | 5 min bei 200°C; 20h bei 100°C | 95000 |

### 3. Eigenschaften des festen Polyurethans und resultierender Prüfkörper:

Die folgenden Eigenschaften der erhaltenen Polyurethane wurden nach den genannten Verfahren bestimmt:

| | |
|---|---|
| Bestimmung des Molekulargewichts: | Gemäß des Stands der Technik wurde das Molekulargewicht gemäß DIN55672-2 ermittelt. Hierbei erfolgte eine Kalibrierung an Hand von PMMA |
| NCO-Wert-Bestimmung: | Die Bestimmung des NCO-Gehalts wurde gemäß EN ISO 11909 durchgeführt: primäre und sekundäre Amine reagieren mit Isocyanaten zu substituierten Harnstoffen. Diese Reaktion verläuft quantitativ in einem Überschuss von Amin. Nach Ablauf der Reaktion wird das überschüssige Amin mit Salzsäure potentiometrisch zurücktitriert. |
| Bestimmung der mittleren Partikelgröße: | Bestimmung der mittleren Partikelgröße: mittels Laserbeugung nassdispergierter Pulver gemäß ISO-Norm ISO 13320:2009 |

### Zitierte Literatur

WO 2015/197515 A1
US 9,453,142
EP 0 089 180 A1
US 4,434,126
"Kunststoffhandbuch, Band 7, Polyurethane", Carl Hanser Verlag, 3. Auflage 1993, Kapitel 3.1 Kunststoffhandbuch, Band VII, herausgegeben von Vieweg und Höchtlen, Carl Hanser Verlag, München 1966 (S103-113)
"Protective Groups in Organic Synthesis ", John Wiley & Sons, Inc. 3. Auflage 1999, Kapitel 2.

## Patentansprüche

1. Verwendung einer Zusammensetzung (Z1) zur Herstellung eines Formkörpers, wobei die Zusammensetzung (Z1) ein thermoplastisches Polyurethan (TPU1) enthält, erhältlich durch Umsetzung mindestens der Komponenten (i) und (ii):
(i) mindestens eine Polyisocyanatzusammensetzung,
(ii) mindestens eine Polyolzusammensetzung,
wobei das thermoplastische Polyurethan (TPU1) zumindest im Temperaturbereich unter 50°C fest ist und Endgruppen ausgewählt aus der Gruppe bestehend aus Endgruppen (EG1) und Endgruppen (EG2) aufweist, wobei die Endgruppen (EG1) bei einer Temperatur (T1) bzw. die Endgruppen (EG2) bei einer Temperatur (T2) unter Bildung von reaktiven Gruppen am thermoplastischen Polyurethan (TPU1) abgespalten werden können, die eine Reaktion mit funktionellen Gruppen des thermoplastischen Polyurethans (TPU1) oder einer weiteren Komponente der Zusammensetzung (Z1) eingehen können,
wobei die Temperatur (T1) und die Temperatur (T2) jeweils größer oder gleich 60°C ist,
wobei die Herstellung des Formkörpers mittels pulverbasierter Schichtbauverfahren erfolgt.

2. Verwendung gemäß Anspruch 1, wobei der Anteil der Summe der Endgruppen (EG1) und (EG2) im Bereich von 0,01 bis 50 mol% bezogen auf den Anteil der Urethangruppen im thermoplastischen Polyurethan (TPU1) liegt.

3. Verwendung gemäß Anspruch 1 oder 2, wobei die Zusammensetzung (Z1) als Komponente (iii) mindestens ein Kettenverlängerer ausgewählt aus Verbindungen mit mindestens zwei gegenüber Isocyanatgruppen reaktiven Gruppen enthält.

4. Verwendung gemäß einem der Ansprüche 1 bis 3, wobei die Polyolzusammensetzung mindestens einen Kettenverlängerer ausgewählt aus Verbindungen mit mindestens zwei gegenüber Isocyanatgruppen reaktiven Gruppen enthält.

5. Verwendung gemäß einem der Ansprüche 1 bis 4, wobei der Kettenverlängerer ausgewählt ist aus der Gruppe bestehend aus Diaminen und Diolen mit einem Molekulargewicht bis 500 g/mol.

6. Verwendung gemäß einem der Ansprüche 1 bis 5, wobei das thermoplastische Polyurethan (TPU1) ein Molekulargewicht im Bereich von 2000 bis 50000 g/mol, bestimmt mittels GPC, aufweist.

7. Verwendung gemäß einem der Ansprüche 1 bis 6, wobei die Isocyanatzusammensetzung mindestens ein Isocyanat ausgewählt aus der Gruppe bestehend aus 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3, '-Dimethyl-4,4 '-Diisocyanato-Diphenyl (TODI), p-Phenylendiisocyanat (PDI), Hexamethylen-1,6-diisocyanat (HDI), 1-Isocyanato-3,3,5-trimethyl-5-isocyanatomethyl-cyclohexan und 4,4' -, 2,4' - und/oder 2,2' - Methylendicyclohexyldiisocyanat (H12MDI), und 1-Isocyanato-3,3,5-trimethyl-5-isocyanatomethyl-cyclohexan (Isophoron-diisocyanat, IPDI) oder Derivaten dieser Isocyanate enthält.

8. Verwendung gemäß einem der Ansprüche 1 bis 7, wobei die Polyolzusammensetzung ein Polyol ausgewählt aus der Gruppe bestehend aus Polyethern, Polyestern, Polycaprolactonen und Polycarbonaten enthält.

9. Verwendung gemäß einem der Ansprüche 1 bis 8, wobei das thermoplastische Polyurethan in Form eines Pulvers mit einer mittleren Partikelgröße d50 im Bereich von 10 bis 500 µm vorliegt.

10. Verwendung einer Zusammensetzung enthaltend ein thermoplastisches Polyurethan erhältlich gemäß einem Verfahren umfassend die Umsetzung mindestens der Komponenten (i) und (ii):
(i) mindestens eine Polyisocyanatzusammensetzung,
(ii) mindestens eine Polyolzusammensetzung,
wobei die Polyisocyanatzusammensetzung ein Isocyanat (I1) enthält, das Endgruppen (EG1) aufweist, die bei einer Temperatur (T1) unter Bildung von reaktiven Gruppen abgespalten werden können, oder wobei die Polyolzusammensetzung ein Polyol enthält, das Endgruppen (EG2) aufweist, die bei einer Temperatur (T2) unter Bildung von reaktiven Gruppen abgespalten werden können, oder wobei die Polyisocyanatzusammensetzung ein Isocyanat (I1) enthält, das Endgruppen (EG1) aufweist, und die Polyolzusammensetzung ein Polyol enthält, das Endgruppen (EG2) aufweist, die bei einer Temperatur (T1) bzw. (T2) unter Bildung von reaktiven Gruppen abgespalten werden können,
und wobei die Temperatur (T1) und die Temperatur (T2) jeweils größer oder gleich 60°C ist,
und die Umsetzung der Komponenten (i) und (ii) bei einer Temperatur erfolgt, die niedriger ist als die Temperatur (T1) und die Temperatur (T2),
zur Herstellung eines Formkörpers, wobei die Herstellung des Formkörpers mittels pulverbasierter Schichtbauverfahren erfolgt.

11. Verwendung gemäß Anspruch 10, wobei das thermoplastische Polyurethan in Form eines Pulvers mit einer mittleren Partikelgröße d50 im Bereich von 10 bis 500 µm vorliegt.

## Claims

1. The use of a composition (Z1) for the production of a shaped body, wherein the composition (Z1) comprises a thermoplastic polyurethane (TPU1), obtainable by reacting at least components (i) and (ii):
(i) at least one polyisocyanate composition,
(ii) at least one polyol composition,
wherein the thermoplastic polyurethane (TPU1) is solid at least in the temperature region below 50°C and has end groups selected from the group consisting of end groups (EG1) and end groups (EG2), wherein the end groups (EG1) can be eliminated at a temperature (T1), and the end groups (EG2) can be eliminated at a temperature (T2), to form reactive groups on the thermoplastic polyurethane (TPU1) that can enter into a reaction with functional groups of the thermoplastic polyurethane (TPU1) or of a further component of the composition (Z1),
wherein the temperature (T1) and the temperature (T2) are each greater than or equal to 60°C,
wherein the shaped body is produced by means of powder-based layer construction processes.

2. The use according to claim 1, wherein the content of the sum total of end groups (EG1) and (EG2) is in the range from 0.01 to 50 mol%, based on the content of urethane groups in the thermoplastic polyurethane (TPU1).

3. The use according to claim 1 or 2, wherein the composition (Z1) comprises as component (iii) at least one chain extender selected from compounds having at least two groups that are reactive toward isocyanate groups.

4. The use according to any of claims 1 to 3, wherein the polyol composition comprises at least one chain extender selected from compounds having at least two groups that are reactive toward isocyanate groups.

5. The use according to any of claims 1 to 4, wherein the chain extender is selected from the group consisting of diamines and diols having a molecular weight of up to 500 g/mol.

6. The use according to any of claims 1 to 5, wherein the thermoplastic polyurethane (TPU1) has a molecular weight in the range from 2000 to 50 000 g/mol, determined by means of GPC.

7. The use according to any of claims 1 to 6, wherein the isocyanate composition comprises at least one isocyanate selected from the group consisting of diphenylmethane 2,2'-, 2,4'- and/or 4,4'-diisocyanate (MDI), naphthylene 1,5-diisocyanate (NDI), tolylene 2,4- and/or 2,6-diisocyanate (TDI), 3,3'-dimethyl-4,4'-diisocyanatodiphenyl (TODI), p-phenylene diisocyanate (PDI), hexamethylene 1,6-diisocyanate (HDI), 1-isocyanato-3,3,5-trimethyl-5-isocyanatomethylcyclohexane and methylenedicyclohexyl 4,4'-, 2,4'- and/or 2,2'-diisocyanate (H12MDI), and 1-isocyanato-3,3,5-trimethyl-5-isocyanatomethylcyclohexane (isophorone diisocyanate, IPDI) or derivatives of these isocyanates.

8. The use according to any of claims 1 to 7, wherein the polyol composition comprises a polyol selected from the group consisting of polyethers, polyesters, polycaprolactones and polycarbonates.

9. The use according to any of claims 1 to 8, wherein the thermoplastic polyurethane is in the form of a powder having a median particle size d50 in the range from 10 to 500 µm.

10. The use of a composition comprising a thermoplastic polyurethane obtainable by a process comprising the reaction at least of components (i) and (ii):
(i) at least one polyisocyanate composition,
(ii) at least one polyol composition,
wherein the polyisocyanate composition comprises an isocyanate (I1) having end groups (EG1) that can be eliminated at a temperature (T1) to form reactive groups, or wherein the polyol composition comprises a polyol having end groups (EG2) that can be eliminated at a temperature (T2) to form reactive groups, or wherein the polyisocyanate composition comprises an isocyanate (I1) having end groups (EG1) and the polyol composition comprises a polyol having end groups (EG2) that can be eliminated at a temperature (T1) and (T2), respectively, to form reactive groups,
and wherein the temperature (T1) and the temperature (T2) are each greater than or equal to 60°C,
and components (i) and (ii) are reacted at a temperature that is lower than the temperature (T1) and the temperature (T2),
for the production of a shaped body, wherein the shaped body is produced by means of powder-based layer construction processes.

11. The use according to claim 10, wherein the thermoplastic polyurethane is in the form of a powder having a median particle size d50 in the range from 10 to 500 µm.

## Revendications

1. Utilisation d'une composition (Z1) pour la fabrication d'un corps moulé, la composition (Z1) contenant un polyuréthane thermoplastique (TPU1) pouvant être obtenu par la transformation au moins des composants (i) et (ii) :
(i) au moins une composition de polyisocyanate,
(ii) au moins une composition de polyol,
le polyuréthane thermoplastique (TPU1) étant solide au moins dans la plage de température inférieure à 50°C et présentant des groupes terminaux choisis dans le groupe constitué par les groupes terminaux (EG1) et les groupes terminaux (EG2), les groupes terminaux (EG1) pouvant être dissociés à une température (T1) ou, selon le cas, les groupes terminaux (EG2) pouvant être dissociés à une température (T2) avec formation, sur le polyuréthane thermoplastique (TPU1), de groupes réactifs qui peuvent participer à une réaction avec des groupes fonctionnels du polyuréthane thermoplastique (TPU1) ou d'un autre composant de la composition (Z1),
la température (T1) et la température (T2) étant respectivement supérieures ou égales à 60°C,
la fabrication du corps moulé ayant lieu au moyen d'un procédé de construction par couches à base de poudre.

2. Utilisation selon la revendication 1, la proportion de la somme des groupes terminaux (EG1) et (EG2) étant située dans la plage de 0,01 à 50% en mole par rapport à la proportion des groupes uréthanes dans le polyuréthane thermoplastique (TPU1).

3. Utilisation selon la revendication 1 ou 2, la composition (Z1) contenant comme composant (iii) au moins un agent d'allongement de chaîne choisi parmi les composés présentant au moins deux groupes réactifs vis-à-vis de groupes isocyanate.

4. Utilisation selon l'une quelconque des revendications 1 à 3, la composition de polyol contenant au moins un agent d'allongement de chaîne choisi parmi les composés présentant au moins deux groupes réactifs vis-à-vis de groupes isocyanate.

5. Utilisation selon l'une quelconque des revendications 1 à 4, l'agent d'allongement de chaîne étant choisi dans le groupe constitué par les diamines et les diols présentant un poids moléculaire jusqu'à 500 g/mole.

6. Utilisation selon l'une quelconque des revendications 1 à 5, le polyuréthane thermoplastique (TPU1) présentant un poids moléculaire dans la plage de 2000 à 50.000 g/mole, déterminé par CPG.

7. Utilisation selon l'une quelconque des revendications 1 à 6, la composition d'isocyanate contenant au moins un isocyanate choisi dans le groupe constitué par le diisocyanate de 2,2'-diphénylméthane, de 2,4'-diphénylméthane et/ou de 4,4'-diphénylméthane (MDI), le diisocyanate de 1,5-naphtylène (NDI), le diisocyanate de 2,4-toluylène et/ou de 2,6-toluylène (TDI), le 3,3'-diméthyl-4,4'-diisocyanato-diphényle (TODI), le diisocyanate de p-phénylène (PDI), le 1,6-diisocyanate d'hexaméthylène (HDI), le 1-isocyanato-3,3,5-triméthyl-5-isocyanatométhylcyclohexane et le diisocyanate de 4,4'-méthylènedicyclohexyle, de 2,4'-méthylènedicyclohexyle et/ou de 2,2'-méthylènedicyclohexyle (H12MDI) et le 1-isocyanato-3,3,5-triméthyl-5-isocyanatométhylcyclohexane (diisocyanate d'isophorone, IPDI) ou les dérivés de ces isocyanates.

8. Utilisation selon l'une quelconque des revendications 1 à 7, la composition de polyol contenant un polyol choisi dans le groupe constitué par les polyéthers, les polyesters, les polycaprolactones et les polycarbonates.

9. Utilisation selon l'une quelconque des revendications 1 à 8, le polyuréthane thermoplastique se trouvant sous forme d'une poudre présentant une grosseur moyenne de particule d50 dans la plage de 10 à 500 µm.

10. Utilisation d'une composition contenant un polyuréthane thermoplastique pouvant être obtenu selon un procédé comprenant la transformation au moins des composants (i) et (ii) :
(i) au moins une composition de polyisocyanate,
(ii) au moins une composition de polyol,
la composition de polyisocyanate contenant un isocyanate (I1) qui présente des groupes terminaux (EG1) qui peuvent être dissociés à une température (T1) avec formation de groupes réactifs ou la composition de polyol contenant un polyol qui présente des groupes terminaux (EG2) qui peuvent être dissociés à une température (T2) avec formation de groupes réactifs, ou la composition de polyisocyanate contenant un isocyanate (I1) qui présente des groupes terminaux (EG1) et la composition de polyol contenant un polyol qui présente des groupes terminaux (EG2) qui peuvent être dissociés à une température (T1) ou, selon le cas, (T2) avec formation de groupes réactifs et la température (T1) et la température (T2) étant respectivement supérieures ou égales à 60°C,
et la transformation des composants (i) et (ii) ayant lieu à une température qui est inférieure à la température (T1) et à la température (T2),
pour la fabrication d'un corps moulé, la fabrication du corps moulé ayant lieu au moyen d'un procédé de construction par couches à base de poudre.

11. Utilisation selon la revendication 10, le polyuréthane thermoplastique se trouvant sous forme d'une poudre présentant une grosseur moyenne de particule d50 dans la plage de 10 à 500 µm.
